# EUROPEAN PATENT SPECIFICATION

(11) **EP 3 837 330 B1**
(45) Date of publication and mention of the grant of the patent: **17.01.2024**
(21) Application number: 19768871.6
(22) Date of filing: 14.08.2019
(51) Int. Cl.: C09K 5/04

(54) **USE OF REFRIGERANT COMPOSITION**
VERWENDUNG EINER KÜHLMITTELZUSAMMENSETZUNG
UTILISATION D'UNE COMPOSITION DE FLUIDE FRIGORIGÈNE

(30) Priority: 14.08.2018 GB 201813237; 11.02.2019 GB 201901885
(43) Date of publication of application: 23.06.2021
(60) Divisional application: 23215301.5
(73) Proprietor: Mexichem Fluor S.A. de C.V., San Luis Potosi C.P. 78395 (MX)
(72) Inventor: LOW, Robert E, Runcorn, Cheshire WA7 4QX (GB)
(74) Representative: Potter Clarkson
(86) International application number: PCT/GB2019/052290
(87) International publication number: WO 2020/035690

(56) References cited:
- WO-A1-2016/190177
- US-A1- 2015 376 486
- US-A1- 2016 178 246
- US-A1- 2016 340 565
- US-A1- 2017 335 159

## Description

The present invention relates to a refrigerant composition and more particularly to a refrigerant composition comprising 1,1-difluoroethylene (R-1132a; vinylidene fluoride) that is useful in a mobile or automotive heat pump system, especially systems for electric vehicles.

The listing or discussion of a prior-published document or any background in the specification should not necessarily be taken as an acknowledgement that a document or background is part of the state of the art or is common general knowledge.

US 2017/335159 describes an air-conditioner working fluid for an electric vehicle containing trifluoroethylene, difluoromethane, and 1,3,3,3-tetrafluoropropene.

The introduction of electric vehicles, where there is no combustion engine to provide a source of heat for the passenger cabin, has meant increasing focus on use of the vehicle air-conditioning unit to run as a heat pump in cold weather. This can be accomplished by reversing the direction of refrigerant flow around the air-conditioning circuit, so that refrigerant is evaporated at low temperature using heat from ambient air and condensed at high temperature against air circulated into the passenger cabin. By using the air-conditioning system in this way, it is possible to deliver more heat to the cabin per unit of electrical energy drawn from the battery than if it were used to provide heat by electrical resistance heating of the incoming cabin air.

The need for passenger air heating is at its highest when outside air is at its coldest, which presents particular challenges for operating the air-conditioning unit as a heat pump. In particular:
- Ambient air temperature can be as low as -25 to -30°C, meaning that to achieve heat pump operation in these conditions the refrigerant should evaporate at temperatures below -30°C.
- Passenger air from the vent into the cabin is ideally heated to 40-50°C, meaning the refrigerant must condense at temperatures higher than 40°C
- Refrigerant evaporation pressure should not fall below 1 atmosphere to avoid ingress of air to the system.
- The same refrigerant fluid should give acceptable performance in air-conditioning and heat pump modes of operation.
- Global Warming Potential (GWP) should be below 150 for new fluids to comply with EU F-Gas regulations.

1,1,1,2-tetrafluoroethane (R-134a) was for some years the refrigerant of choice in automotive air conditioning systems following the phase out of dichlorodifluoromethane (R-12) which being a CFC has a high ozone depletion potential. The EU F-Gas Directive was then implemented which mandates a Global Warming Potential (GWP) limit of 150 for new car mobile air-conditioning (MAC) systems. As a result, the use of R-134a has now been largely superseded for new systems in Europe by the use of flammable 2,3,3,3-tetrafluoropropene (R-1234yf). R-1234yf is slightly less efficient than R-134a and new system designs now include extra equipment (an internal heat exchanger) to recover the loss in efficiency.

Mobile air conditioning systems that use either R-134a or R-1234yf as the refrigerant cannot operate efficiently in heat pump mode if the ambient temperature is lower than about -15 to - 20°C, because their evaporation pressure at the required evaporation temperature would drop below atmospheric pressure. Carbon dioxide (R-744) is a high pressure refrigerant which can work well as a low temperature heat pump fluid. However, its performance in air-conditioning mode for car systems is known to be worse (less energy efficient) than either R-134a or R-1234yf at moderate to high ambient air temperatures.

There is a need for a refrigerant composition that can operate efficiently in a mobile, e.g. automotive, heat pump system for heating vehicles, especially electric vehicles. There is a need to find a working refrigerant fluid for use in a combined mobile heat pump/air-conditioner system in an electric vehicle that is capable of operating as a heat pump cycle working fluid with a positive (greater than atmospheric suction pressure) at evaporation temperatures down to about - 30C, whilst also giving acceptable performance (energy efficiency) when used in the air-conditioning mode. Furthermore, any new refrigerant to be developed for an automotive system must have a Global Warming Potential (GWP) of less than 150 to comply with European environmental legislation.

We have found that compositions of 1,1-difluoroethylene (R-1132a; vinylidene fluoride) with other hydrofluorocarbon refrigerants offer the potential for improved performance compared to R-1234yf when used in automotive heat pump systems, particularly for electric vehicles. The compositions can also offer acceptable performance when used in air-conditioning mode. The compositions are capable of abstracting heat from the environment at lower ambient temperatures than is possible with R-1234yf or R-134a and in addition can offer improved energy efficiency. This is an especially desirable combination of properties for use in electric vehicles, which must otherwise use battery energy to provide heat for passenger comfort.

Accordingly, in a first aspect the present invention provides a use as a refrigerant in a heat pump system in an electric vehicle of a composition comprising from 3 to 30% by weight 1,1-difluoroethylene (R-1132a) based on the total weight of the composition and at least one fluorocarbon refrigerant compound selected from the group consisting of 2,3,3,3-tetrafluoropropene (R-1234yf), difluoromethane (R-32), 1,3,3,3-tetrafluoropropene (R-1234ze(E)) and 1,1-difluoroethane (R-152a).

Conveniently, the refrigerant composition further comprises at least one of trifluoroethylene (R-1123), trifluoroiodomethane (CF₃I), carbon dioxide (R-744, CO₂) and 1,1,1,2-tetrafluoroethane (R-134a).

In a further aspect, the invention provides a use as a refrigerant in a heat pump system in an electric vehicle of a composition comprising from 3 to 30% by weight 1,1-difluoroethylene (R-1132a) based on the total weight of the composition and trifluoroiodomethane (CF₃I).

Preferred compositions of the invention contain from 3 to 20 weight %, such as from about 3 to 15 weight % of the 1,1-difluoroethylene (R-1132a) based on the total weight of the refrigerant composition.

In an embodiment, the refrigerant composition comprises from 3 to 30% by weight 1,1-difluoroethylene (R-1132a), at least one tetrafluoropropene refrigerant compound selected from the group consisting of 2,3,3,3-tetrafluoropropene (R-1234yf) and 1,3,3,3-tetrafluoropropene (R-1234ze(E)) and optionally difluoromethane (R-32). In this embodiment, the R-1132a is preferably present in an amount of from 3 to 20 weight % based on the total weight of the refrigerant composition. Where difluoromethane is included, it is preferably present in an amount of from 1 to 21 weight % based on the total weight of the refrigerant composition. Whether the composition of this first embodiment is a binary or a ternary composition the selected tetrafluoropropene provides the balance of the refrigerant composition.

When trifluoroiodomethane (CF₃I) is included in the composition of the invention, typically it is present in an amount less than R-1234yf or R-1234ze(E). A preferred CF₃I-containing composition of the invention comprises from 3 to 30% by weight R-1132a, R-32, R-1234yf and CF₃I.

When carbon dioxide (CO₂) is included in the compositions of the invention, typically the combined content of R-1132a and CO₂ is less than about 30 weight %, such as less than about 20 weight %. A preferred CO₂-containing composition of the invention comprises from 3 to 30% by weight R-1132a, R-32, R-1234yf and CO₂.

In another embodiment, the refrigerant composition comprises from 3 to 30% by weight R-1132a, R-152a and optionally R-32.

In a further embodiment, the refrigerant composition comprises from 3 to 30% by weight R-1132a, R-152a and R-1234yfsuch as from 4 to 10 weight % R-1132a, from 2 to 30 weight % R-152a and from 60 to 94 weight % R-1234yf.

In a further embodiment, the refrigerant composition comprises from 3 to 30% by weight R-1132a, R-32, R-152a and at least one tetrafluoropropene refrigerant compound selected from the group consisting of R-1234yf and R-1234ze(E).

The refrigerant compositions of the invention may also contain R-134a, typically in an amount of from about 1 to about 10 weight % based on the total weight of the refrigerant composition. Preferred R-134a-containing compositions include those comprising R-1132a, CF₃I and R-134a; R-1132a, R-1234yf and R-134a; R-1132a, R-1234ze(E) and R-134a; R-1132a, R-1234yf, R-32 and R-134a; R-1132a, R-1234ze(E), R-32 and R-134a; R-1132a, R-1234yf, CF₃I and R-134a; R-1132a, R-1234ze(E), CF₃I and R-134a; R-1132a, R-152a and R-134a; R-1132a, R-152a, R-32 and R-134a; R-1132a, R-1234yf, R-152a and R-134a; and R-1132a, R-1234ze(E), R-152a and R-134a.

When trifluoroethylene (R-1123) is included in the compositions of the invention, typically it is present in less than about 30 weight %, such as less than about 20 weight %. A preferred R-1123-containing composition of the invention comprises from 3 to 30% by weight R-1132a, R-1123 and R-1234yf or wherein the refrigerant composition comprises from 3 to 30% by weight R-1132a, R-152a, R-134a and R-1234yf. Preferred R-1123 containing compositions are those where the maximum molar content of R-1123 in the blend as formulated and in the vapour in equilibrium with the blend will be less than about 55% at temperatures of -40 °C or higher. This is to reduce the risk of R-1123 disproportionation (self-reaction). The above-described compositions and the tabulated compositions (see Examples 24 to 27 below) are predicted to meet these criteria.

Further compositions of the present invention comprise, optionally consist essentially of, R-1132a, R-32 and CO₂, preferably from about 3 to about 20 weight % R-1132a, from about 1 to about 32 weight % R-32 and from about 50 to about 95 weight % CO₂, such as from about 3 to about 15 weight % R-1132a, from about 2 to about 32 weight % R-32 and from about 55 to about 93weight % CO₂, such as from about 64 to about 93 weight % of carbon dioxide, from about 2 to about 25 weight % of difluoromethane and from about 3 to about 14 weight % of R-1132a, for example from about 65 to about 93 weight % of carbon dioxide, from about 2 to about 22 weight % of difluoromethane and from about 3 to about 14 weight % of R-1132a. These compositions may contain substantially no R-1234yf.

By "substantially no", we include the meaning that the compositions of the invention contain 0.5% by weight or less of the stated component, preferably 0.1% or less, based on the total weight of the composition.

As used herein, all % amounts mentioned in compositions herein, including in the claims, are by weight based on the total weight of the compositions, unless otherwise stated.

In an embodiment, the compositions may consist essentially of the stated components. By the term "consist essentially of", we include the meaning that the compositions of the invention contain substantially no other components, particularly no further (hydro)(fluoro)compounds (e.g. (hydro)(fluoro)alkanes or (hydro)(fluoro)alkenes) known to be used in heat transfer compositions. The term "consist of" is included within the meaning of "consist essentially of".

For the avoidance of doubt, it is to be understood that the stated upper and lower values for ranges of amounts of components in the compositions of the invention described herein may be interchanged in any way, provided that the resulting ranges fall within the broadest scope of the invention.

The refrigerant compositions will typically be combined with a lubricant when used in a heat pump or combined heat pump and air-conditioning system. Suitable lubricants include polyol esters, such as neopentyl polyol esters, and polyalkylene glycols, preferably end capped at one or both ends with an alkyl, e.g. a C₁₋₄ alkyl, group.

The compositions of the invention have zero ozone depletion potential.

Typically, the compositions of the invention have a GWP of less than about 150, such as less than about 100, for example less than about 50.

Typically, the compositions of the invention are of reduced flammability hazard when compared to R-1132a.

Flammability may be determined in accordance with ASHRAE Standard 34 incorporating the ASTM Standard E-681 with test methodology as per Addendum 34p dated 2004, the entire content of which is incorporated herein by reference.

In one aspect, the compositions have one or more of (a) a higher lower flammable limit; (b) a higher ignition energy (c) a higher auto-ignition temperature; or (d) a lower flame velocity compared to R-1132a alone. Preferably, the compositions of the invention are less flammable compared to R-1132a in one or more of the following respects: lower flammable limit at 23°C; lower flammable limit at 60°C; breadth of flammable range at 23°C or 60°C; auto-ignition temperature (thermal decomposition temperature); minimum ignition energy in dry air, or burning velocity. The flammable limit and burning velocity being determined according to the methods specified in ASHRAE-34 and the auto-ignition temperature being determined in a 500ml glass flask by the method of ASTM E659-78.

Preferred compositions of the invention are those which have laminar burning velocity less than 10 cm/s, and especially preferred are those where the formulation and the "worst case fractionated formulation" both have burning velocity below 10 cm/s, meaning that they will be classified as "2L" flammable under ASHRAE Standard 34.

In a preferred embodiment, the compositions of the invention are non-flammable. For example, the compositions of the invention are non-flammable at a test temperature of 60°C using the ASHRAE-34 methodology. Advantageously, the mixtures of vapour that exist in equilibrium with the compositions of the invention at any temperature between about -20°C and 60°C are also non-flammable.

In some applications it may not be necessary for the formulation to be classed as non-flammable by the ASHRAE-34 methodology. It is possible to develop fluids whose flammability limits will be sufficiently reduced in air to render them safe for use in the application, for example if it is physically not possible to make a flammable mixture by leaking the refrigeration equipment charge into the surrounds.

In one embodiment, the compositions of the invention have a flammability classifiable as 1 or 2L according to the ASHRAE standard 34 classification method, indicating non-flammability (class 1) or a weakly flammable fluid with flame speed lower than 10 cm/s (class 2L).

The compositions of the invention preferably have a temperature glide in an evaporator or condenser of less than about 15K, even more preferably less than about 10K, and even more preferably less than about 5K.

The compositions of the present invention are useful in mobile, e.g. automotive, heat pump applications and also exhibit acceptable performance in mobile air-conditioning applications. The compositions may provide particular benefits where the heat pump and/or air-conditioning system is used in an electric vehicle, whether a purely electric or hybrid vehicle.

Unless otherwise stated, it is to be understood that the term "electric vehicle" refers to both purely electric vehicles as well as vehicles which use electricity as one of several means of propulsion, such as hybrid vehicles.

Preferably, in the use of the invention, the refrigerant compositions evaporate at temperatures below about -30°C, thereby enabling heat pump operation at ambient air temperatures as low as -25 to -30°C.

Accordingly, in a further aspect the present invention provides an electric vehicle with a heat pump and/or air-conditioning system which uses a refrigerant composition of the first aspect of the invention. The refrigerant composition can be as described in any of the embodiments discussed above.

Accordingly, the invention also provides (i) a method of producing cooling in an electric vehicle which method comprises evaporating a refrigerant composition of the invention in the vicinity of a body to be cooled; and (ii) a method of producing heating in an electric vehicle which method comprises condensing a refrigerant composition of the invention in the vicinity of a body to be heated.

The invention is illustrated by the following non-limiting examples.

### EXAMPLES

The invention is now illustrated by theoretical cycle modelling of performance of selected compositions of the invention in a heat pump cycle and in an air-conditioning cycle. R-1234yf was chosen as the reference refrigerant for both cycles.

The modelling was carried out in Microsoft Excel using NIST REFPROP10 as the thermodynamic data source. The phase equilibrium of mixtures of R-1132a with R-32 and R-1234yf was first studied using a constant-volume apparatus to measure the vapour pressure of binary mixtures of R-1132a/R-32 or R-1132a/R-1234yf over a range of temperatures from - 70C to +40C. This data was then regressed to yield binary interaction parameters for use in REFPROP that reproduced the experimental data.

For the heat pump cycle the following conditions were assumed:

| **Data Input Section** | | **R1234yf** |
|---|---|---|
| Heating duty | kW | 4 |
| Mean condenser temperature | °C | 45 |
| Mean evaporator temperature | °C | -20 |
| Condenser subcooling | K | 5 |
| Evaporator superheat | K | 5 |
| Evaporator pressure drop | bar | 0 |
| Suction line pressure drop | bar | 0 |
| Condenser pressure drop | bar | 0 |
| Compressor suction superheat | K | 10 |
| Isentropic efficiency | | 65% |

The cycle modelled included intermediate pressure vapour injection of refrigerant vapour to improve cycle performance. For each composition the optimum injection pressure was determined so as to maximise the Coefficient of Performance (COP) for heating.

Results for selected binary and ternary mixtures of the invention are summarised in the following Examples 1-8. It was discovered that incorporation of R-1132a increased the COP (energy efficiency) and increased the evaporation pressure of the refrigerants compared to R-1234yf. It also reduced the volumetric flow of refrigerant that would need to be pumped through the system, indicating that pressure drop losses would be reduced compared to R-1234yf. For comparison, modelled performance data of two commercially available blends (R-454C and R-516A) is also provided in the table below:

| **Results** | | **R1234yf** | **R454C** | **R516A** |
|---|---|---|---|---|
| Heating COP | | 3.08 | 3.73 | 3.13 |
| Heating COP relative to reference | | 100.0% | 120.9% | 101.5% |
| Compressor displacement needed | m³/hr | 11.0 | 7.4 | 10.5 |
| Compressor displacement relative to reference | | 100.0% | 67.4% | 95.9% |
| Compressor discharge temperature | °C | 45.6 | 64.5 | 49.7 |
| Discharge temp. difference from reference | K | 0.0 | 18.9 | 4.1 |
| Evaporator inlet pressure | bar | 1.51 | 2.34 | 1.51 |
| Condenser inlet pressure | bar | 11.5 | 17.9 | 11.8 |
| Evaporator glide (out-in) | K | 0.0 | 6.3 | 0.0 |
| Condenser glide (in-out) | K | 0.0 | 6.6 | 0.0 |

### Example 1 (binary compositions of R-1132a and R-1234yf

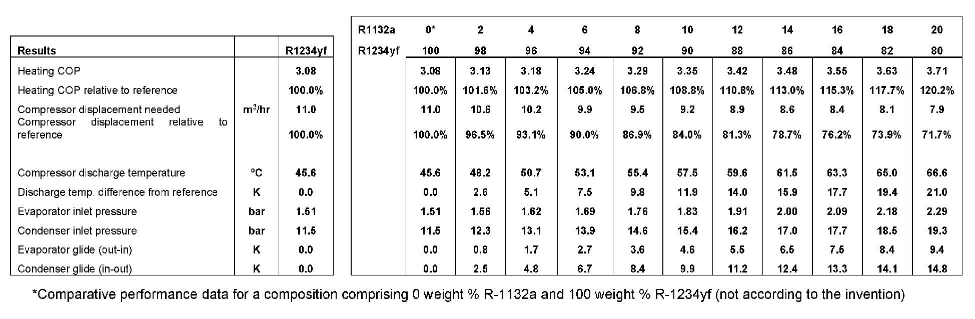

### Example 2 (ternary compositions of R-1132a, 4 wt% R-32 and R-1234yf)

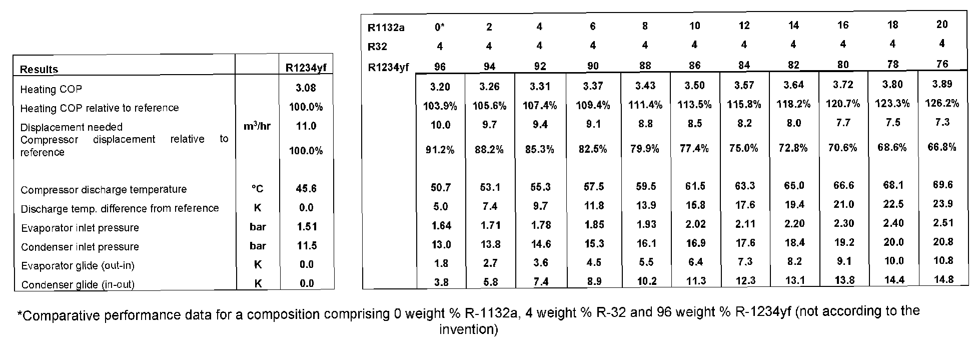

### Example 3 (ternary compositions of R-1132a, 12 wt% R-32 and R-1234yf)

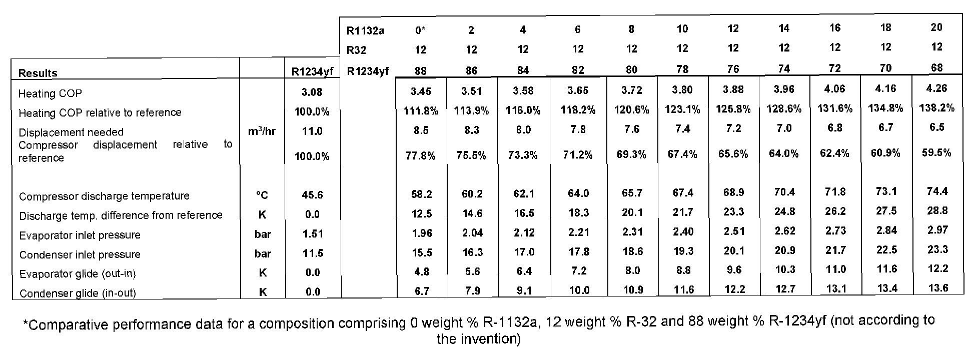

### Example 4 (ternary compositions of R-1132a, 20 wt% R-32 and R-1234yf)

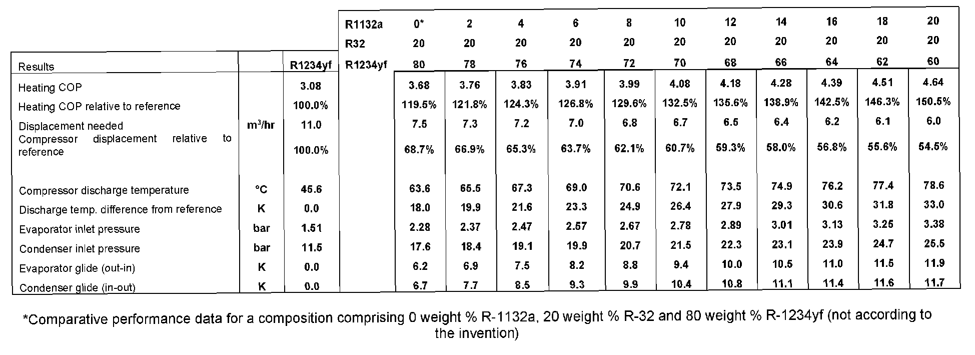

### Example 5 (binary compositions of R-1132a and R-152a)

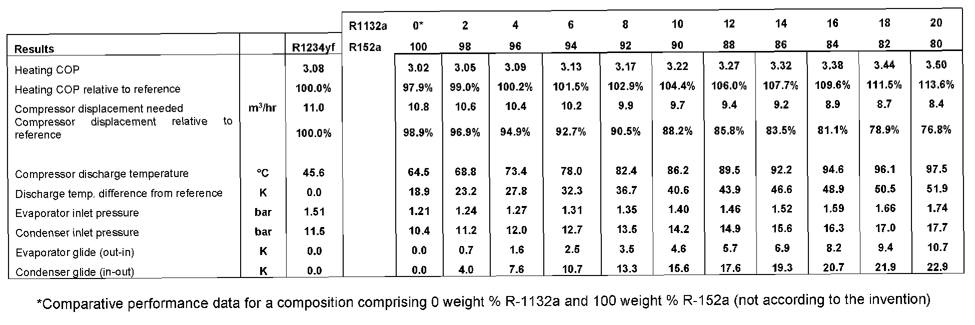

### Example 6 (ternary compositions of R-1132a, 8 wt% R-32 and R-1234yf)

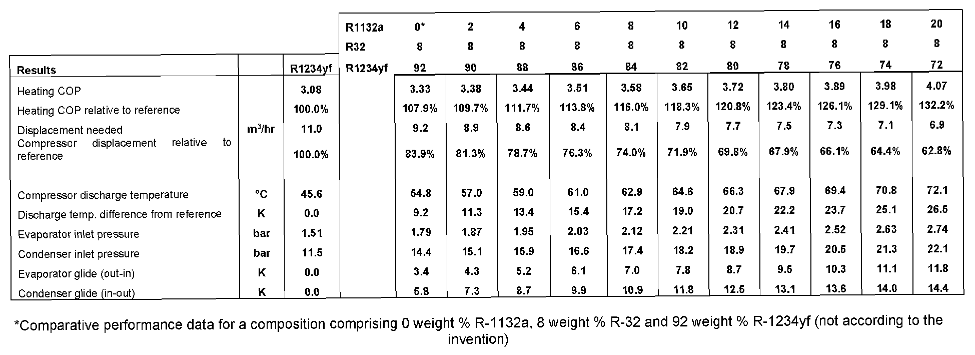

### Example 7 (ternary compositions of R-1132a, 16 wt% R-32 and R-1234yf)

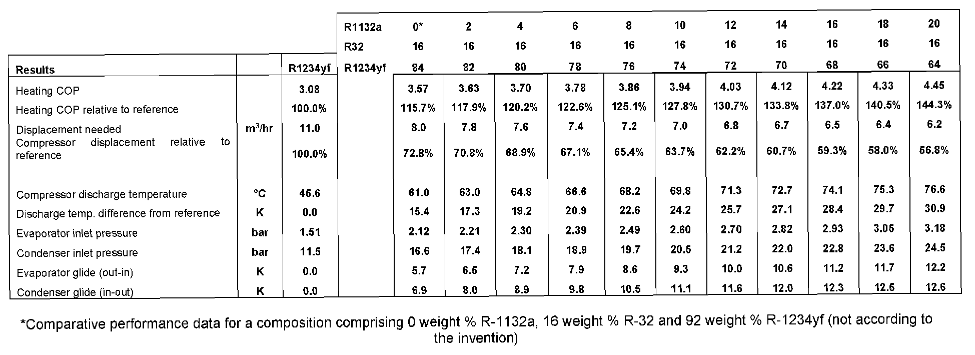

### Example 8 (ternary compositions of R-1132a, 21.5 wt% R-32 and R-1234yf)

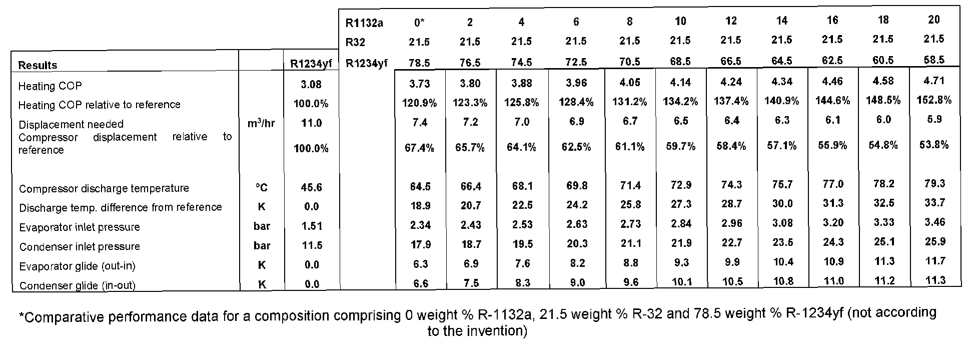

Air-conditioning performance was then assessed (Examples 9 and 10) using the following theoretical cycle modelling conditions representing operating in a high temperature ambient condition:

| **Data Input Section** | | **R1234yf** |
|---|---|---|
| Cooling duty | kW | 6 |
| Mean condenser temperature | °C | 65 |
| Mean evaporator temperature | °C | 5 |
| Condenser subcooling | K | 5 |
| Evaporator superheat | K | 5 |
| Evaporator pressure drop | bar | 0 |
| Suction line pressure drop | bar | 0 |
| Condenser pressure drop | bar | 0 |
| Compressor suction superheat | K | 10 |
| Isentropic efficiency | | 65% |

It was found possible to obtain improved heating mode performance and also to obtain cooling mode performance where the theoretical COP for cooling was within about 10% of that obtained with R-1234yf. The fluids of the invention would operate at higher pressure and reduced mass/volumetric flows compared to R-1234yf meaning that efficiency losses in a real system from pressure drop effects would also be reduced compared to R-1234yf.

### Example 9 (binary compositions of R-1132a and R-1234yf)

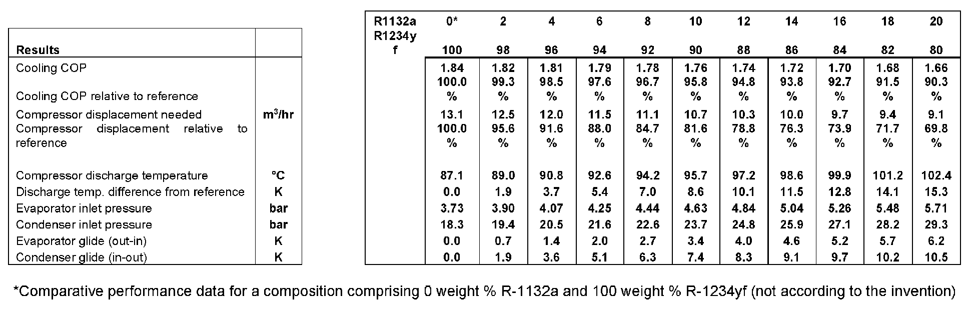

### Example 10 (ternary compositions of R-1132a, 8 wt% R-32 and R-1234yf))

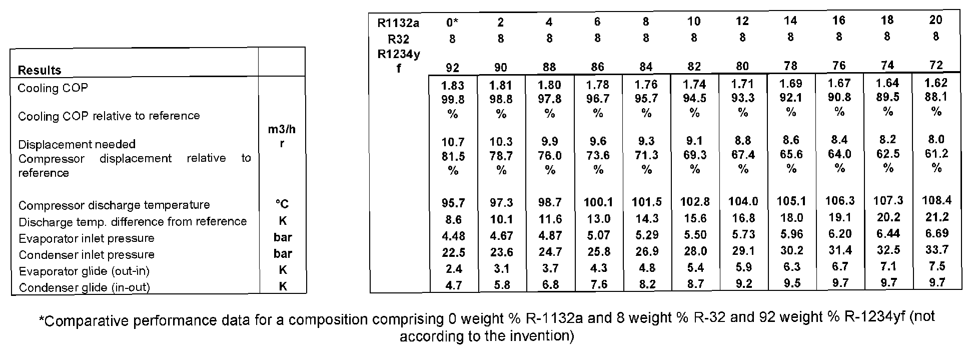

The performance of selected binary, ternary and quaternary compositions of the present invention in a heat pump cycle is further demonstrated in the Examples 11 to 34 below. Again, R-1234yf was chosen as the reference refrigerant for the cycle.

The following operating conditions were assumed:

| **Data Input Section** | | **R-1234yf** |
|---|---|---|
| Compressor displacement | m3/hr | 16.5 |
| Mean condenser temperature | °C | 45.0 |
| Mean evaporator temperature | °C | -25.0 |
| Condenser subcooling | K | 3.0 |
| Evaporator superheat | K | 1.0 |
| Evaporator pressure drop | bar | 0.20 |
| Suction line pressure drop | bar | 0.10 |
| Condenser pressure drop | bar | 0.20 |
| Compressor suction superheat | K | 10.0 |
| Isentropic efficiency | | 65.0% |

In summary, the modelled performance data demonstrates the following advantages of the compositions according to the present invention:
(a) Essentially equivalent or improved energy efficiency (COP) in heating mode cycle operation compared to R-1234yf alone
(b) Increased evaporation pressure, leading to higher volumetric capacity and better ability to operate at lower external air temperatures

Furthermore, performance in the air-conditioning cycle of selected binary blends comprising R-1132a and R-32 and ternary blends comprising R-1132a, R-32 and CO₂ is demonstrated in the Examples 35 to 37 below.

### Example 11 (binary compositions of R-1132a and R-1234ze(E))

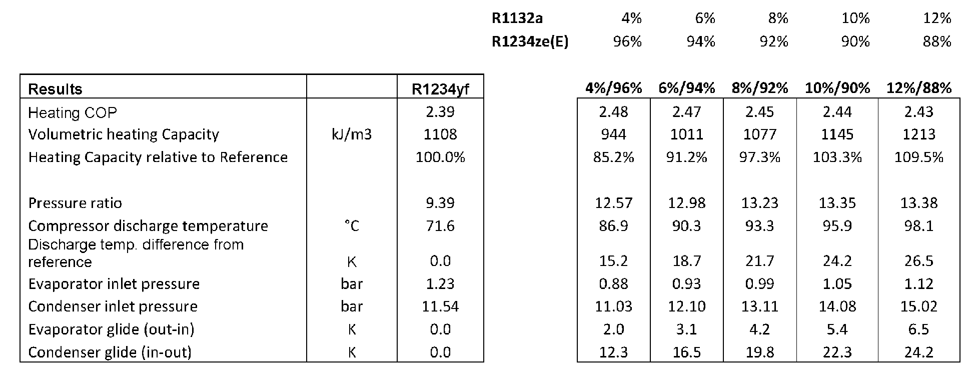

### Example 12 (binary compositions of R-1132a and CF₃I)

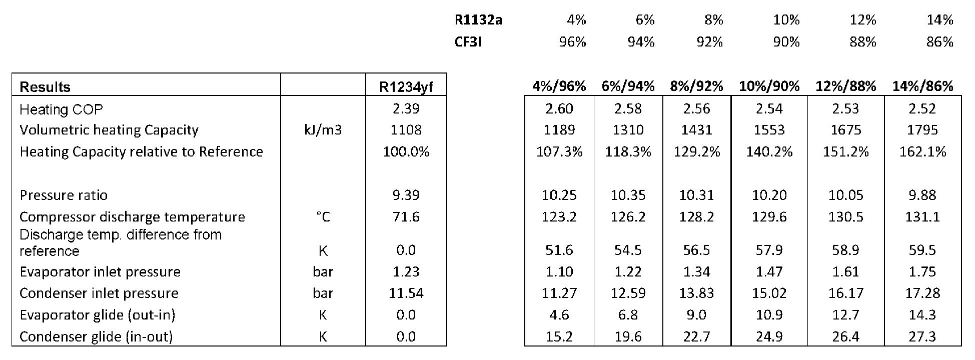

### Example 13 (ternary compositions of 4 wt% R-1132a, R-1234yf and CF₃I)

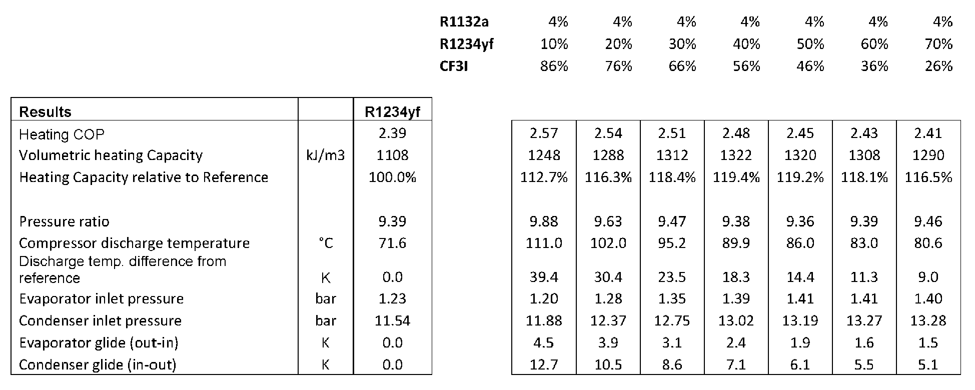

### Example 14 (ternary compositions of 8 wt% R-1132a, R-1234yf and CF₃I

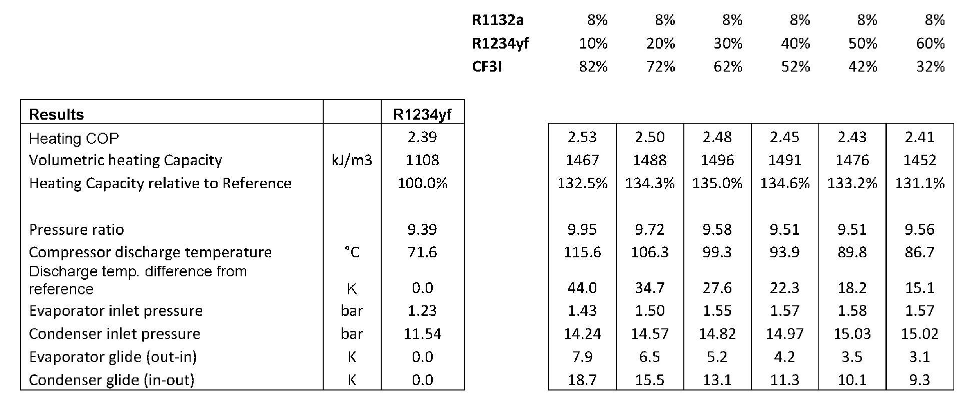

### Example 15 (ternary compositions of 10 wt% R-1132a, R-1234yf and CF₃I)

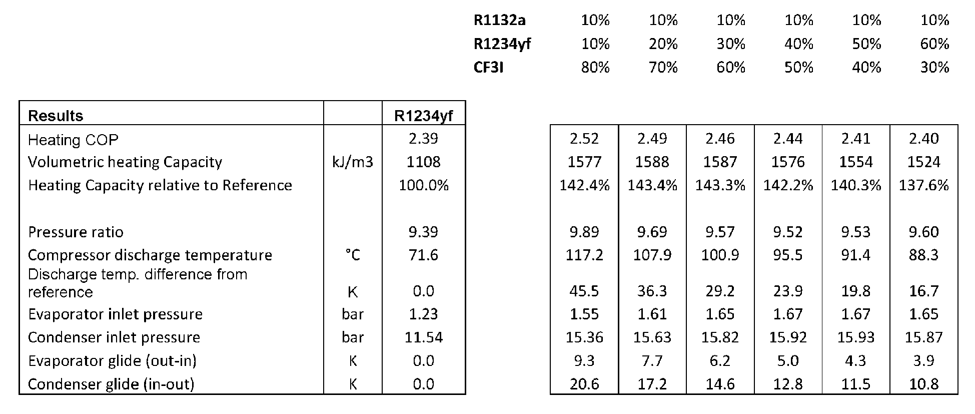

### Example 16 (quaternary compositions of 4 wt% R-1132a, 8 wt% R-32, R-1234yf and CF₃I)

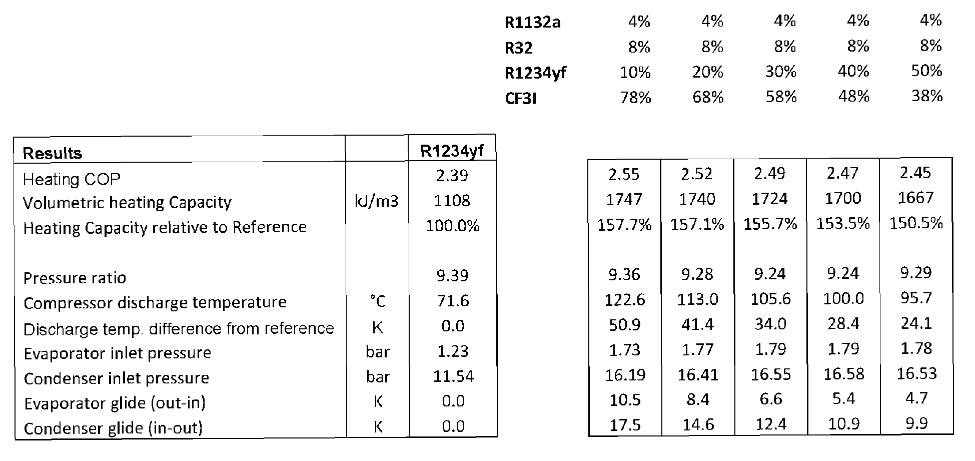

### Example 17 (ternary compositions of R-1132a, 5 wt% R-32 and R-152a)

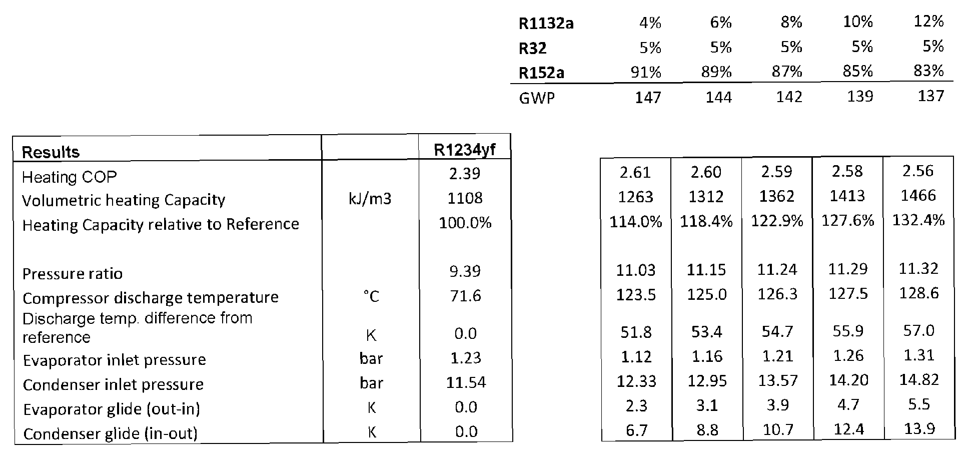

### Example 18 (quaternary compositions of 4 wt% R-1132a, 6 wt% R-32, R-1234yf and R-152a)

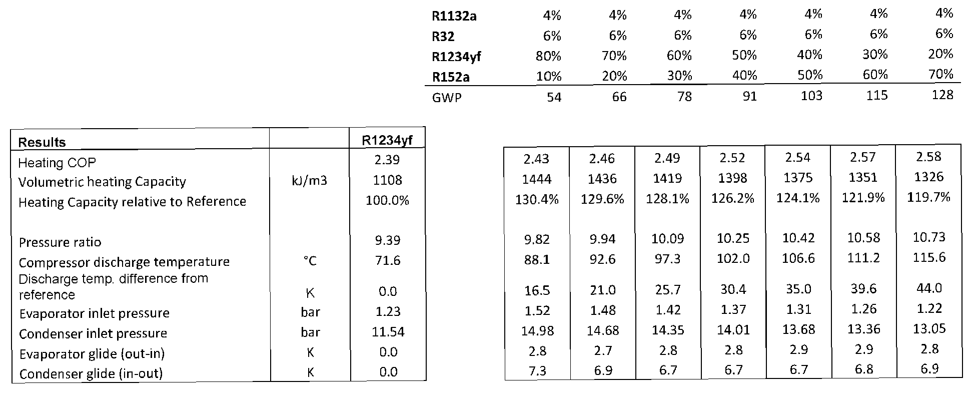

### Example 19 (quaternary compositions of 4 wt% R-1132a, 12 wt% R-32, R-1234yf and R-152a)

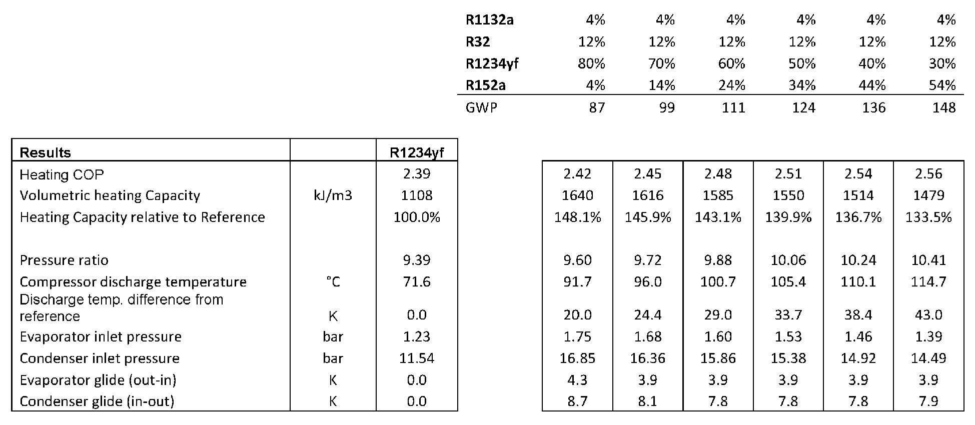

### Example 20 (quaternary compositions of 4 wt% R-1132a, 16 wt% R-32, R-1234yf and R-152a)

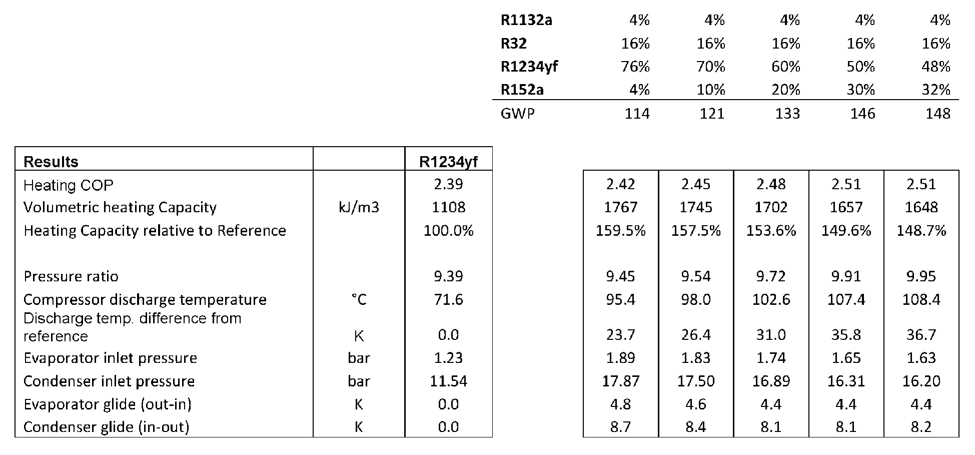

### Example 21 (quaternary compositions of 8 wt% R-1132a, 16 wt% R-32, R-1234yf and R-152a)

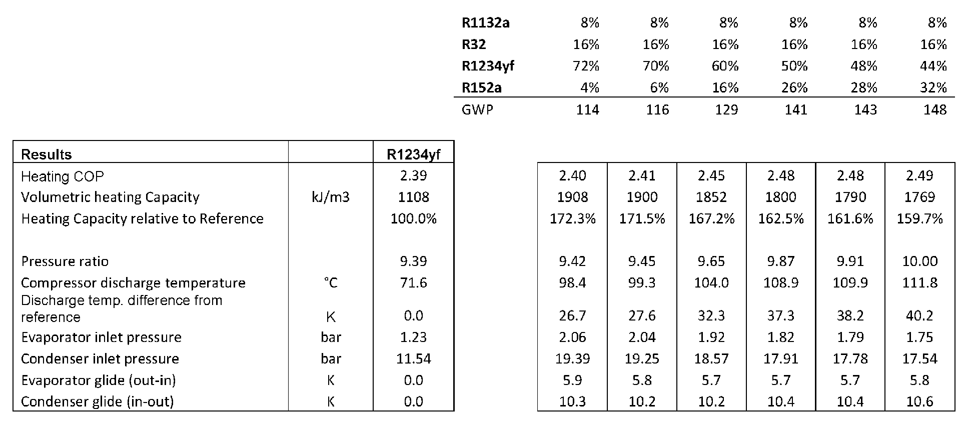

### Example 22 (ternary compositions of R-1132a, 10 wt% R-32 and R-1234ze(E) and R-1132a, 21 wt% R-32 and R-1234ze(E))

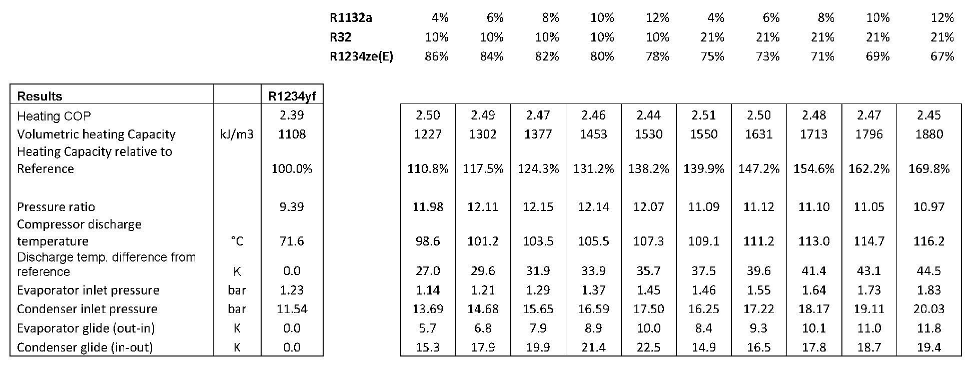

### Example 23 (quaternary compositions of 3 wt% R-1132a, 3 wt% CO₂, R-32 and R-1234yf)

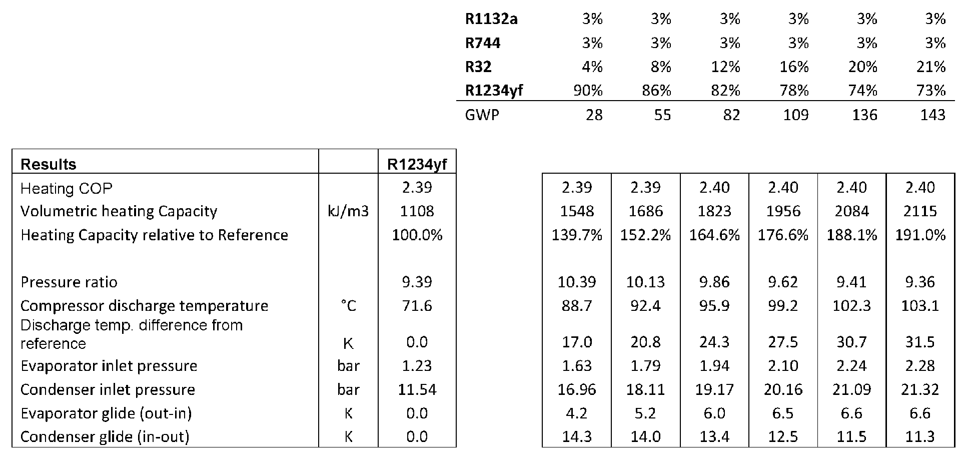

### Example 24 (quaternary compositions of 4 wt% R-1132a, 4 wt% CO₂, R-32 and R-1234yf)

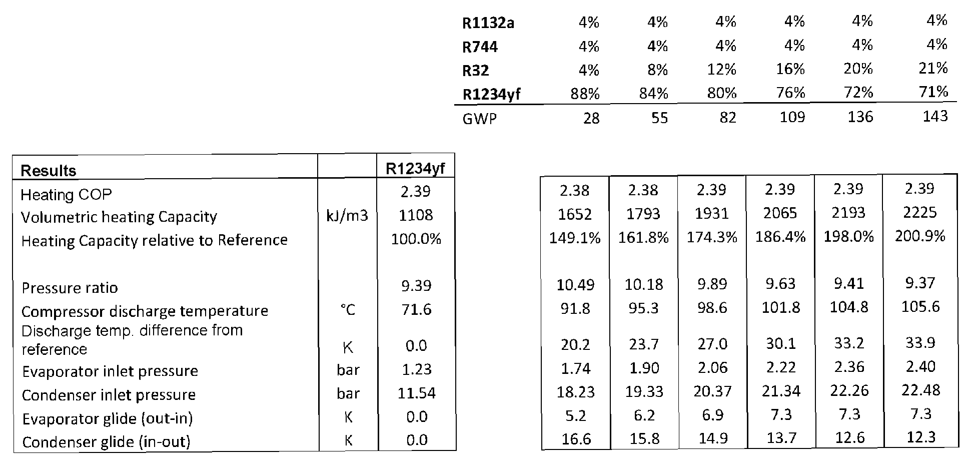

### Example 25 (quaternary compositions of 4 wt% R-1132, 2 wt% CO₂, R-32 and R-1234yf)

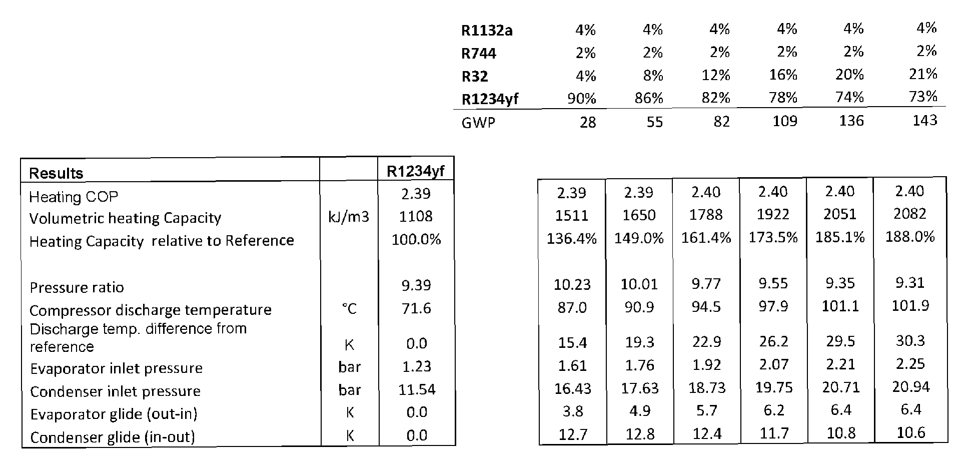

### Example 26 (quaternary compositions of 5 wt% R-1132a, 3 wt% CO₂, R-32 and R-1234yf)

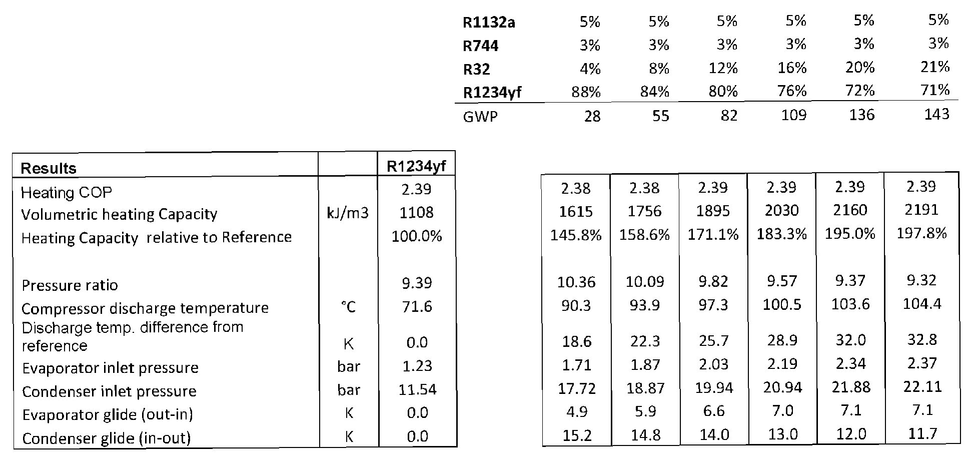

### Example 27 (ternary compositions of 4 wt% R-1132a, R-1123 and R-1234yf)

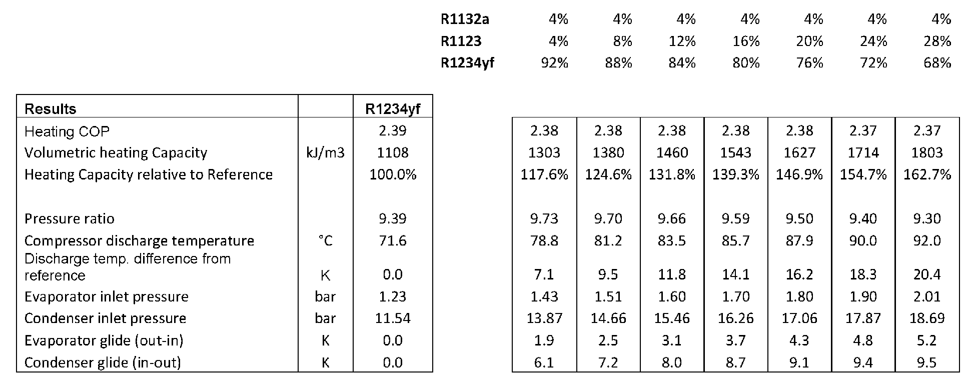

### Example 28 (ternary compositions of 6 wt% R-1132a, R-1123 and R-1234yf)

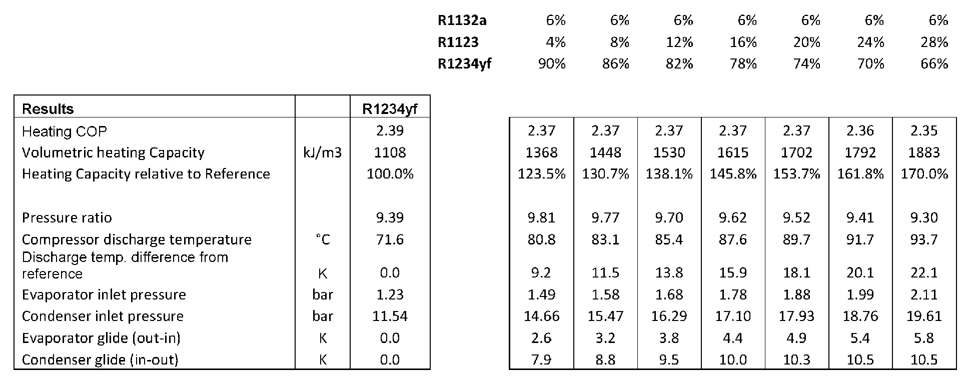

### Example 29 (ternary compositions of 8 wt% R-1132a, R-1123 and R-1234yf)

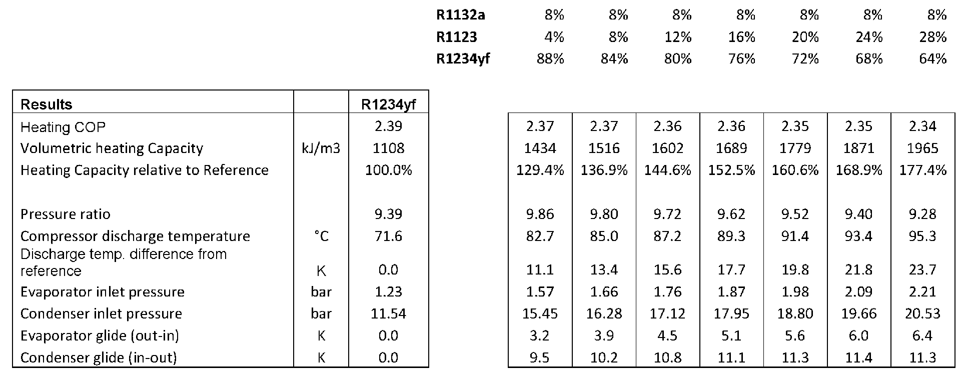

### Example 30 (ternary compositions of 10 wt% R-1132a, R-1123 and R-1234yf)

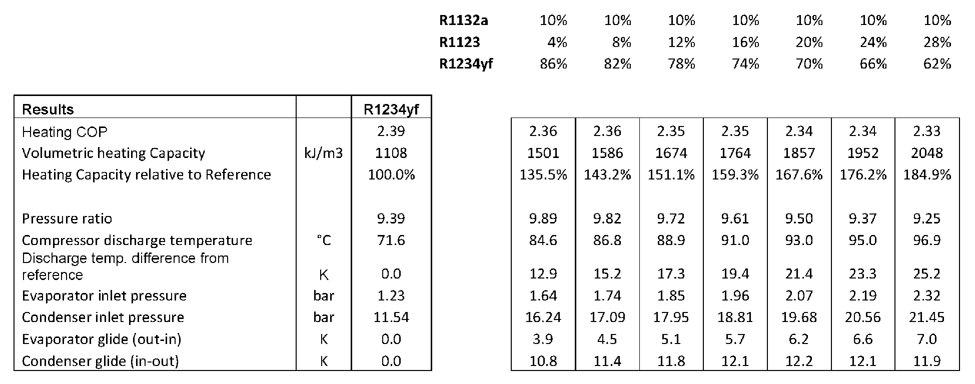

### Example 31 (ternary compositions of 4 weight % R-1132a, R-152a and R-1234yf)

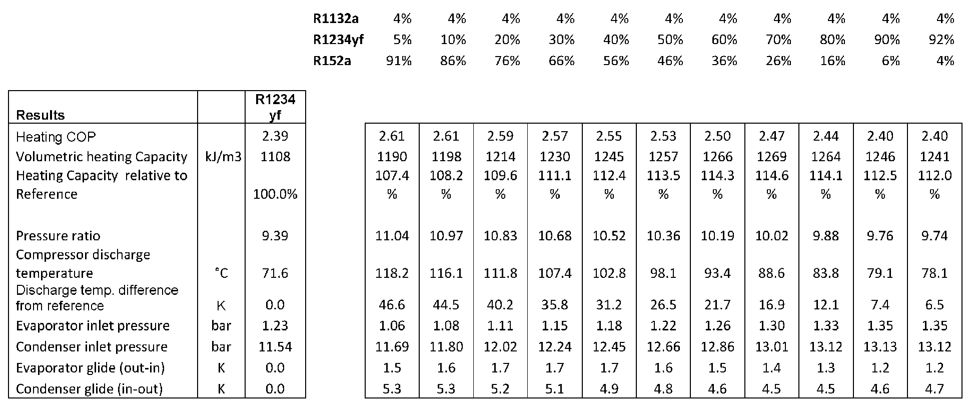

### Example 32 (ternary compositions of 6 weight % R-1132a, R-152a and R-1234yf)

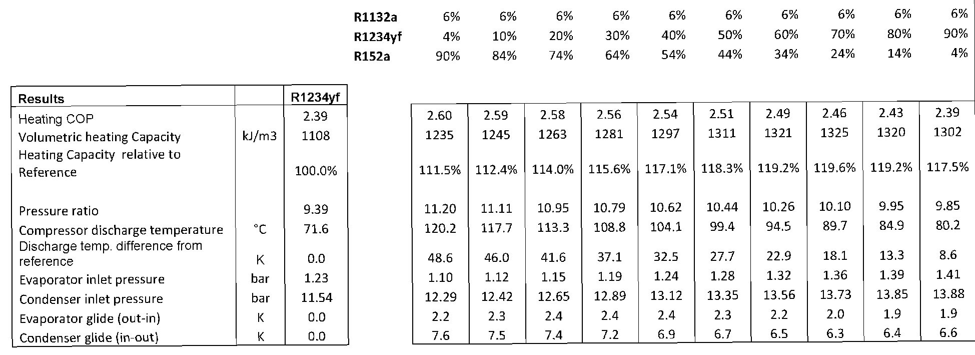

### Example 33 (ternary compositions of 8 weight % R-1132a, R-152a and R-1234yf)

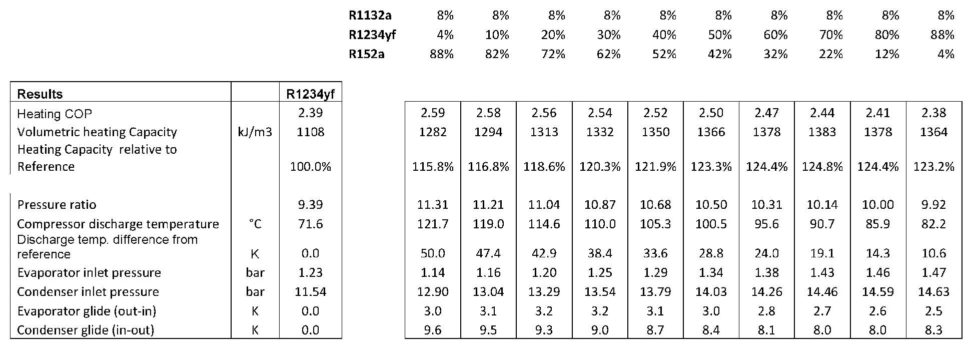

### Example 34 (ternary compositions of 10 weight % R-1132a, R-152a and R-1234yf)

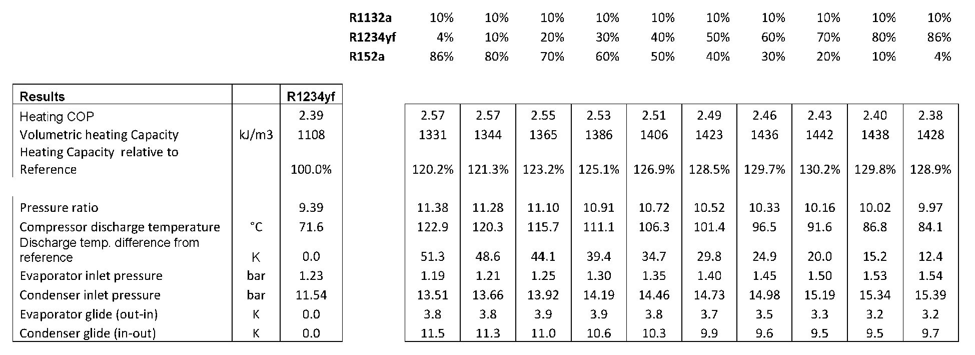

### Example 35 (ternary compositions of 4 wt% R-1132a, R-32 and CO₂ and ternary compositions comprising 8 wt% R-1132a, R-32 and CO₂)

| | | **CO2** | 92% | 88% | 84% | 80% | 76% | 72% | 68% | 64% |
|---|---|---|---|---|---|---|---|---|---|---|
| | | **R1132a** | 4% | 4% | 4% | 4% | 4% | 4% | 4% | 4% |
| | | **R32** | 4% | 8% | 12% | 16% | 20% | 24% | 28% | 32% |
| Coefficient of Performance (COP) | | | 2.73 | 2.80 | 2.87 | 2.97 | 307 | 3.17 | 3.24 | 3.29 |
| Volumetric cooling capacity | kJ/m³ | | 13948 | 13584 | 13213 | 12840 | 12500 | 12472 | 12323 | 12092 |
| Compressor discharge temperature | °C | | 102.6 | 103.4 | 103.9 | 103.9 | 103.7 | 105.6 | 107.3 | 108.9 |
| Evaporator pressure | bar | | 39.5 | 37.5 | 35.5 | 33.6 | 31.8 | 30.2 | 28.6 | 27.1 |
| Gas cooler pressure | bar | | 85.6 | 81.4 | 77.2 | 72.9 | 68.7 | 66.2 | 63.7 | 61.3 |
| Evaporator temperature glide | K | | 1.1 | 2.3 | 3.3 | 4.4 | 5.3 | 6.4 | 7.3 | 8.1 |

| **RESULTS** | | | | | | | | | | |
|---|---|---|---|---|---|---|---|---|---|---|
| | | **CO2** | 88% | 84% | 80% | 76% | 72% | 68% | 64% | 60% |
| | | **R1132a** | 8% | 8% | 8% | 8% | 8% | 8% | 8% | 8% |
| | | **R32** | 4% | 8% | 12% | 16% | 20% | 24% | 28% | 32% |
| Coefficient of Performance (COP) | | | 2.71 | 2.77 | 2.85 | 2.94 | 304 | 3.15 | 3.23 | 3.28 |
| Volumetric cooling capacity | kJ/m³ | | 13729 | 13375 | 13014 | 12648 | 12285 | 12214 | 12094 | 11878 |
| Compressor discharge temperature | °C | | 101.8 | 102.6 | 103.1 | 103.2 | 102.8 | 104.1 | 105.8 | 107.3 |
| Evaporator pressure | bar | | 39.2 | 37.2 | 35.3 | 33.4 | 31.6 | 30.0 | 28.4 | 26.9 |
| Gas cooler pressure | bar | | 85.2 | 81.0 | 76.9 | 72.6 | 68.3 | 65.5 | 63.0 | 60.6 |
| Evaporator temperature glide | K | | 1.1 | 2.2 | 3.3 | 4.3 | 5.3 | 6.2 | 7.1 | 7.9 |

### Example 36 (ternary compositions of 10 wt% R-1132a, R-32 and CO₂ and ternary compositions comprising 14 wt% R-1132a, R-32 and CO₂)

| | | **CO2** | 88% | 84% | 80% | 76% | 72% | 69% | 64% | 60% |
|---|---|---|---|---|---|---|---|---|---|---|
| | | **R1132a** | 10% | 10% | 10% | 10% | 10% | 10% | 10% | 10% |
| | | **R32** | 2% | 6% | 10% | 14% | 18% | 21% | 26% | 30% |
| Coefficient of Performance (COP) | | | 2.66 | 2.73 | 2.79 | 2.87 | 2.97 | 3.05 | 3.18 | 3.25 |
| Volumetric cooling capacity | kJ/m³ | | 13789 | 13446 | 13077 | 12717 | 12359 | 12084 | 12028 | 11875 |
| Compressor discharge temperature | °C | | 100.8 | 101.8 | 102.5 | 102.9 | 102.8 | 102.4 | 104.3 | 105.9 |
| Evaporator pressure | bar | | 40.2 | 38.1 | 36.0 | 34.1 | 32.3 | 31.0 | 29.0 | 27.5 |
| Gas cooler pressure | bar | | 87.0 | 82.9 | 78.8 | 74.6 | 70.3 | 67.1 | 63.8 | 61.4 |
| Evaporator temperature glide | K | | 0.6 | 1.7 | 2.7 | 3.8 | 4.8 | 5.4 | 6.6 | 7.5 |

| **RESULTS** | | | | | | | | | | |
|---|---|---|---|---|---|---|---|---|---|---|
| | | **CO2** | 82% | 78% | 74% | 70% | 65% | 60% | 56% | |
| | | **R1132a** | 14% | 14% | 14% | 14% | 14% | 14% | 14% | |
| | | **R32** | 4% | 8% | 12% | 16% | 21% | 26% | 30% | |
| Coefficient of Performance (COP) | | | 2.67 | 2.73 | 2.81 | 2.89 | 3.02 | 3.16 | 3.24 | |
| Volumetric cooling capacity | kJ/m³ | | 13383 | 13045 | 12696 | 12347 | 11903 | 11784 | 11654 | |
| Compressor discharge temperature | °C | | 100.6 | 101.4 | 101.9 | 102.1 | 101.6 | 102.9 | 104.4 | |
| Evaporator pressure | bar | | 38.8 | 36.8 | 34.8 | 33.0 | 30.8 | 28.7 | 27.2 | |
| Gas cooler pressure | bar | | 84.4 | 80.4 | 76.2 | 72.1 | 66.8 | 63.1 | 60.6 | |
| Evaporator temperature glide | K | | 1.1 | 2.2 | 3.2 | 4.2 | 5.4 | 6.5 | 7.3 | |

### Example 37 (binary compositions of R-1132a and R-32)

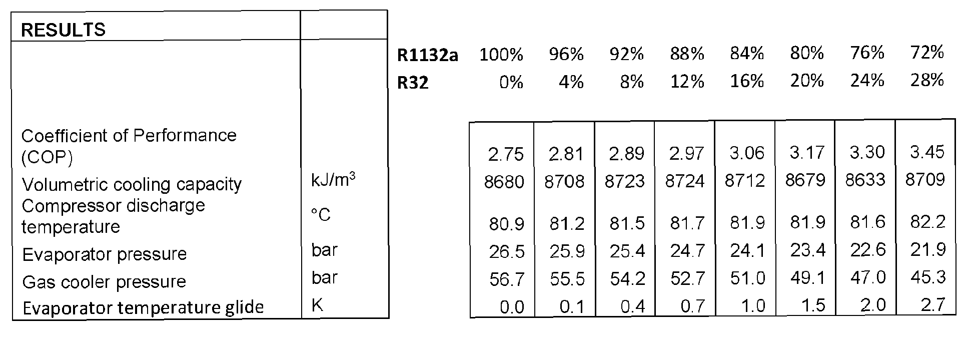

Example 38 illustrates the performance data of a ternary composition comprising 8 weight % R-1132a, 11 weight % R-32 and 81 weight % R-1234yf in a mobile heat pump/air-conditioner system for use in an electric car.

The system performance was run in cooling mode (air-conditioning) according to SAE Standard J2765 at three test conditions, using the same charge size of refrigerant for the blend as for R-1234yf. The compressor speed was reduced for the blend to achieve the same cooling capacity as R-1234yf at each test point, in accordance with the standard practice for comparison of different refrigerants.

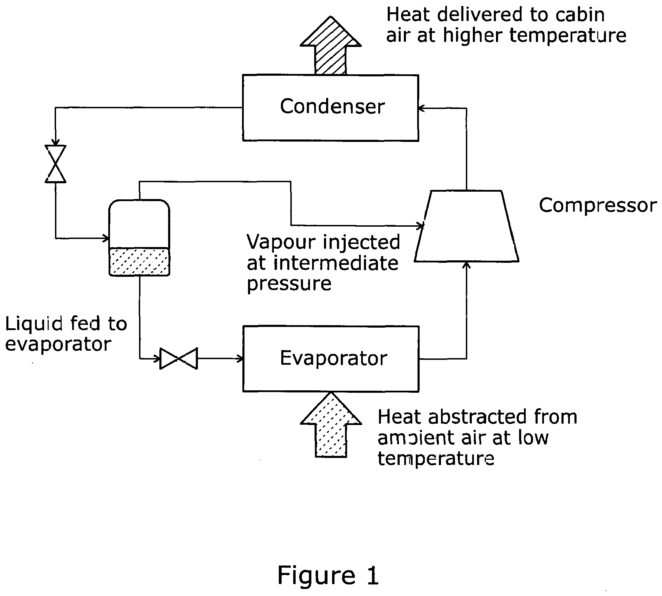

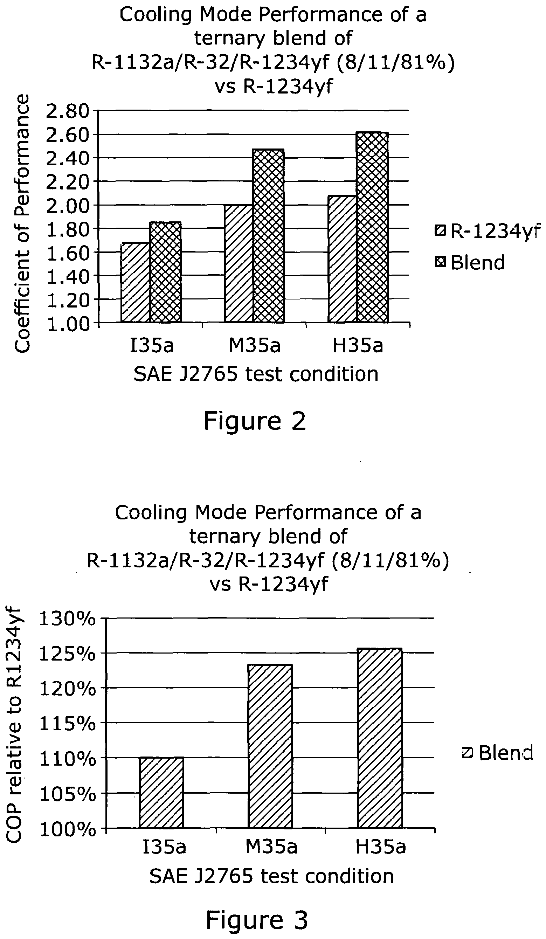

The results are shown below and illustrated in Figures 2 and 3. The tested composition was consistently able to deliver improved energy efficiency at each test point, with the Coefficient of Performance (COP) varying from 110% to 125% of the R-1234yf value.

### Example 38 (ternary composition of 8 weight % R-1132a, 11 weight % R-32 and 81 weight % R-1234yf)

| | | | **Condenser** | | **Evaporator** | | | |
|---|---|---|---|---|---|---|---|---|
| **Test Name** | **Ambient Temperature** | **Compressor speed** | **Air on temperature** | **Air face velocity** | **Air on temperature** | **relative humidity** | **Air mass flow** | **Target air off temperature** |
| | (°C) | (rpm) | (°C) | (m/s) | (°C) | (%) | (kg/min) | (°C) |
| **I35a** | 35 | 900 | 35 | 1.5 | 35 | 40 | 9 | 3 |
| **M35a** | 35 | 2500 | 35 | 3 | 35 | 40 | 9 | 3 |
| **H35a** | 35 | 4000 | 35 | 4 | 35 | 40 | 9 | 3 |

| | **R1234yf performance data** | | | | | | | |
|---|---|---|---|---|---|---|---|---|
| | **Cooling capacity** (kW) | **COP** | **Compressor work** (kW) | | | | | |
| **I35a** | 5.12 | 1.68 | 3.05 | | | | | |
| **M35a** | 5.74 | 2.00 | 2.87 | | | | | |
| **H35a** | 5.88 | 2.08 | 2.83 | | | | | |

| | **R-1132a/R-32/R-1234yf (8/11/81%) performance data** | | | | | | | |
|---|---|---|---|---|---|---|---|---|
| | **Cooling capacity** (kW) | **COP** | **Compressor work** (kW) | | | | | |
| **I35a** | 5.14 | 1.85 | 2.78 | | | | | |
| **M35a** | 5.75 | 2.47 | 2.33 | | | | | |
| **H35a** | 5.85 | 2.61 | 2.24 | | | | | |

| | | | | | | | | **COP of blend relative to R-1234yf** |
|---|---|---|---|---|---|---|---|---|
| **I35a** | | | | | | | | 110% |
| **M35a** | | | | | | | | 123% |
| **H35a** | | | | | | | | 126% |

| | | | | | | | | |
|---|---|---|---|---|---|---|---|---|
| COP = coefficient of performance | | | | | | | | |

## Claims

1. Use as a refrigerant in a heat pump system in an electric vehicle of a composition comprising from 3 to 30% by weight 1,1-difluoroethylene (R-1132a) based on the total weight of the composition and at least one fluorocarbon refrigerant compound selected from the group consisting of 2,3,3,3-tetrafluoropropene (R-1234yf), difluoromethane (R-32), 1,3,3,3-tetrafluoropropene (R-1234ze(E)) and 1,1-difluoroethane (R-152a).

2. The use of claim 1 wherein the refrigerant composition further comprises at least one of trifluoroethylene (R-1123), trifluoroiodomethane (CF₃I), carbon dioxide (R-744, CO2) and 1,1,1,2-tetrafluoroethane (R-134a).

3. Use as a refrigerant in a heat pump system in an electric vehicle of a composition comprising from 3 to 30% by weight 1,1-difluoroethylene (R-1132a) based on the total weight of the composition and trifluoroiodomethane (CF₃I).

4. The use of claim 1 wherein the refrigerant composition comprises from 3 to 30% by weight R-1132a, R-152a and R-1234yf, such as from 4 to 10 weight % R-1132a, from 2 to 30 weight % R-152a and from 60 to 94 weight % R-1234yf.

5. The use of claim 1 wherein the refrigerant composition comprises from 3 to 30% by weight R-1132a, at least one tetrafluoropropene refrigerant compound selected from the group consisting of R-1234yf and R-1234ze(E), and optionally difluoromethane (R-32), such as wherein the R-32 is present in an amount of from 1 to 21 weight % based on the total weight of the refrigerant composition.

6. The use of any of claims 1 to 5, wherein the R-1132a is present in an amount of from 3 to 20 weight %, such as from about 3 to about 15 weight %, based on the total weight of the refrigerant composition.

7. The use of claim 5 or 6, wherein the refrigerant composition further comprises CF₃I, preferably wherein the CF₃I is present in an amount less than R-1234yf or R-1234ze(E), and/or wherein the refrigerant composition comprises from 3 to 30% by weight R-1132a, R-32, R-1234yf and CF₃I.

8. The use of claim 5 or 6, wherein the refrigerant composition further comprises COz (R-744), preferably wherein the combined COz and R-1132a content is less than about 30 weight %, such as less than about 20 weight %, and/or wherein the refrigerant composition comprises from 3 to 30% by weight R-1132a, R-32, R-1234yf and COz.

9. The use of claim 1, 2 or 6 wherein the refrigerant composition comprises from 3 to 30% by weight R-1132a, R-152a and optionally R-32, such as wherein the refrigerant composition comprises from 3 to 30% by weight R-1132a, R-152a, R-32 and at least one tetrafluoropropene refrigerant compound selected from the group consisting of R-1234yf and R-1234ze(E).

10. The use of any of claims 3 to 7 or 9 wherein the refrigerant composition further comprises R-134a, preferably in an amount of from about 1 to about 10 weight % R-134a.

11. The use of claim 2 wherein the refrigerant composition comprises from 3 to 30% by weight R-1132a, R-1123 and R-1234yf or wherein the refrigerant composition comprises from 3 to 30% by weight R-1132a, R-152a, R-134a and R-1234yf.

12. The use of claim 2 wherein the refrigerant composition comprises R-1132a, R-32 and COz, preferably from about 3 to about 20 weight % R-1132a, from about 1 to about 32 weight % R-32 and from about 50 to about 95 weight % COz, such as from about 3 to about 15 weight % R-1132a, from about 2 to about 32 weight % R-32 and from about 55 to about 93 weight % CO₂, for instance from about 64 to about 93 weight % of carbon dioxide, from about 2 to about 25 weight % of difluoromethane and from about 3 to about 14 weight % of R-1132a, for example from about 65 to about 93 weight % of carbon dioxide, from about 2 to about 22 weight % of difluoromethane and from about 3 to about 14 weight % of R-1132a.

13. The use of any of the preceding claims wherein the refrigerant composition has a Global Warming Potential (GWP) below 150.

14. The use of any of the preceding claims wherein the heat pump system is also adapted to perform air-conditioning.

15. The use of any of claims 1 to 14 wherein the composition consists essentially of the stated components.

16. The use of any of the preceding claims, wherein the refrigerant composition is less flammable than R-1132a alone, preferably wherein the refrigerant composition has:
a. a higher flammable limit'
b. a higher ignition energy; and/or
c. a lower flame velocity
compared to R-1132a alone, preferably wherein the refrigerant composition is non-flammable, such as wherein the refrigerant composition is non-flammable at ambient temperature, or wherein the composition is non-flammable at 60 °C.

17. The use of any of the preceding claims wherein the heat pump system further comprises a lubricant, preferably a polyolester (POE) or polyalkylene glycol (PAG) lubricant.

18. The use of any of the preceding claims, wherein the refrigerant composition evaporates at temperatures below -30°C, preferably wherein the refrigerant composition also condenses at temperatures above 40°C and/or wherein the refrigeration composition has a temperature glide in an evaporator or condenser of less than about 15K, preferably less than about 10K, such as less than about 5K.

19. The use of any of the preceding claims, wherein the refrigerant composition can operate in heat pump mode at an ambient temperature lower than about -15 °C, preferably lower than above -20°C.

20. An electric vehicle equipped with a heat pump system and a refrigerant composition as defined in any of claims 1 to 19.

21. A method of producing cooling in an electric vehicle which method comprises evaporating a refrigerant composition as defined in any of claims 1 to 19 in the vicinity of a body to be cooled.

22. A method of producing heating in an electric vehicle which method comprises condensing a refrigerant composition as defined in any one of claims 1 to 19 in the vicinity of a body to be heated.

## Patentansprüche

1. Verwendung als Kältemittel in einem Wärmepumpensystem in einem Elektrofahrzeug einer Zusammensetzung, die 3 bis 30 Gew.-% 1,1-Difluorethylen (R-1132a) basierend auf dem Gesamtgewicht der Zusammensetzung und mindestens eine Fluorkohlenstoff-Kältemittelverbindung, ausgewählt aus der Gruppe bestehend aus 2,3,3,3-Tetrafluorpropen (R-1234yf), Difluormethan (R-32), 1,3,3,3-Tetrafluorpropen (R-1234ze(E)) und 1,1-Difluorethan (R-152a), umfasst.

2. Verwendung nach Anspruch 1, wobei die Kältemittelzusammensetzung ferner mindestens eines von Trifluorethylen (R-1123), Trifluoriodmethan (CF₃I), Kohlendioxid (R-744, CO₂) und 1,1,1,2-Tetrafluorethan (R-134a) umfasst.

3. Verwendung als Kältemittel in einem Wärmepumpensystem in einem Elektrofahrzeug einer Zusammensetzung, die 3 bis 30 Gew.-% 1,1-Difluorethylen (R-1132a) basierend auf dem Gesamtgewicht der Zusammensetzung und Trifluoriodmethan (CF₃I) umfasst.

4. Verwendung nach Anspruch 1, wobei die Kältemittelzusammensetzung 3 bis 30 Gew.-% R-1132a, R-152a und R-1234yf, wie etwa 4 bis 10 Gew.-% R-1132a, 2 bis 30 Gew.-% R-152a und 60 bis 94 Gew.-% R-1234yf umfasst.

5. Verwendung nach Anspruch 1, wobei die Kältemittelzusammensetzung 3 bis 30 Gew.-% R-1132a, mindestens eine Tetrafluorpropen-Kältemittelverbindung, ausgewählt aus der Gruppe bestehend aus R-1234yf und R-1234ze(E), und optional Difluormethan (R-32) umfasst, beispielsweise wobei R-32 in einer Menge von 1 bis 21 Gew.-%, bezogen auf das Gesamtgewicht der Kältemittelzusammensetzung, vorhanden ist.

6. Verwendung nach einem der Ansprüche 1 bis 5, wobei R-1132a in einer Menge von 3 bis 20 Gew.-%, wie etwa 3 bis etwa 15 Gew.-%, bezogen auf das Gesamtgewicht der Kältemittelzusammensetzung, vorhanden ist.

7. Verwendung nach Anspruch 5 oder 6, wobei die Kältemittelzusammensetzung ferner CF₃I umfasst, wobei das CF3I vorzugsweise in einer Menge von weniger als R-1234yf oder R-1234ze(E) vorhanden ist, und/oder wobei die Kältemittelzusammensetzung 3 bis 30 Gew.-% R-1132a, R-32, R-1234yf und CF3 umfasst.

8. Verwendung nach Anspruch 5 oder 6, wobei die Kältemittelzusammensetzung ferner CO₂ (R-744) umfasst, vorzugsweise wobei der kombinierte Gehalt an CO₂ und R-1132a weniger als etwa 30 Gew.-%, beispielsweise weniger als etwa 20 Gew.-%, beträgt und/oder wobei die Kältemittelzusammensetzung 3 bis 30 Gew.-% R-1132a, R-32, R-1234yf und CO₂ umfasst.

9. Verwendung nach Anspruch 1, 2 oder 6, wobei die Kältemittelzusammensetzung 3 bis 30 Gew.-% R-1132a, R-152a und optional R-32 umfasst, beispielsweise wobei die Kältemittelzusammensetzung 3 bis 30 Gew.-% R-1132a, R-152a, R-32 und mindestens eine Tetrafluorpropen-Kältemittelverbindung, ausgewählt aus der Gruppe bestehend aus R-1234yf und R-1234ze(E), umfasst.

10. Verwendung nach einem der Ansprüche 3 bis 7 oder 9, wobei die Kältemittelzusammensetzung ferner R-134a, vorzugsweise in einer Menge von etwa 1 bis etwa 10 Gew.-% R-134a, umfasst.

11. Verwendung nach Anspruch 2, wobei die Kältemittelzusammensetzung 3 bis 30 Gew.-% R-1132a, R-1123 und R-1234yf umfasst, oder wobei die Kältemittelzusammensetzung 3 bis 30 Gew.-% R-1132a, R-152a, R-134a und R-1234yf umfasst.

12. Verwendung nach Anspruch 2, wobei die Kältemittelzusammensetzung R-1132a, R-32 und CO2, vorzugsweise etwa 3 bis etwa 20 Gew.-% R-1132a, etwa 1 bis etwa 32 Gew.-% R-32 und etwa 50 bis etwa 95 Gew.-% CO2, wie etwa 3 bis etwa 15 Gew.-% R-1132a, etwa 2 bis etwa 32 Gew.-% R-32 und etwa 55 bis etwa 93 Gew.-% CO2, zum beispielsweise etwa 64 bis etwa 93 Gew.-% Kohlendioxid, etwa 2 bis etwa 25 Gew.-% Difluormethan und etwa 3 bis etwa 14 Gew.-% R-1132a, zum Beispiel etwa 65 bis etwa 93 Gew.-% Kohlendioxid, etwa 2 bis etwa 22 Gew.-% Difluormethan und etwa 3 bis etwa 14 Gew.-% R-1132a umfasst.

13. Verwendung nach einem der vorhergehenden Ansprüche, wobei die Kältemittelzusammensetzung ein globales Erwärmungspotenzial (GWP) unter 150 aufweist.

14. Verwendung nach einem der vorhergehenden Ansprüche, wobei das Wärmepumpensystem auch zur Klimatisierung geeignet ist.

15. Verwendung nach einem der Ansprüche 1 bis 14, wobei die Zusammensetzung im Wesentlichen aus den genannten Komponenten besteht.

16. Verwendung nach einem der vorhergehenden Ansprüche, wobei die Kältemittelzusammensetzung weniger entflammbar ist als R-1132a allein, wobei die Kältemittelzusammensetzung vorzugsweise Folgendes aufweist:
a. eine höhere Explosionsgrenze'
b. eine höhere Zündenergie; und/oder
c. eine geringere Flammengeschwindigkeit
im Vergleich zu R-1132a allein, wobei die Kältemittelzusammensetzung vorzugsweise nicht brennbar ist, beispielsweise wobei die Kältemittelzusammensetzung bei Umgebungstemperatur nicht brennbar ist, oder wobei die Zusammensetzung bei 60 °C nicht brennbar ist.

17. Verwendung nach einem der vorhergehenden Ansprüche, wobei das Wärmepumpensystem ferner ein Schmiermittel, vorzugsweise ein Polyolester- (POE) oder Polyalkylenglykol- (PAG) Schmiermittel umfasst.

18. Verwendung nach einem der vorhergehenden Ansprüche, wobei die Kältemittelzusammensetzung bei Temperaturen unter -30°C verdampft, wobei die Kältemittelzusammensetzung vorzugsweise auch bei Temperaturen über 40°C kondensiert, und/oder wobei die Kühlzusammensetzung in einem Verdampfer oder Kondensator einen Temperaturgleiter von weniger als etwa 15 K, vorzugsweise weniger als etwa 10 K, wie beispielsweise weniger als etwa 5 K, aufweist.

19. Verwendung nach einem der vorhergehenden Ansprüche, wobei die Kältemittelzusammensetzung im Wärmepumpenmodus bei einer Umgebungstemperatur von weniger als etwa -15°C, vorzugsweise weniger als über - 20°C, betrieben werden kann.

20. Elektrofahrzeug, ausgestattet mit einem Wärmepumpensystem und einer Kältemittelzusammensetzung nach einem der Ansprüche 1 bis 19.

21. Verfahren zur Erzeugung von Kühlung in einem Elektrofahrzeug, wobei das Verfahren das Verdampfen einer Kältemittelzusammensetzung nach einem der Ansprüche 1 bis 19 in der Nähe eines zu kühlenden Körpers umfasst.

22. Verfahren zum Erzeugen einer Heizung in einem Elektrofahrzeug, wobei das Verfahren das Kondensieren einer Kältemittelzusammensetzung nach einem der Ansprüche 1 bis 19 in der Nähe eines zu erwärmenden Körpers umfasst.

## Revendications

1. Utilisation comme réfrigérant dans un système de pompe à chaleur dans un véhicule électrique d'une composition comprenant de 3 à 30 % en poids de 1,1-difluoroéthylène (R-1132a) sur la base du poids total de la composition et au moins un composé réfrigérant fluorocarboné choisi dans le groupe constitué du 2,3,3,3-tétrafluoropropène (R-1234yf), du difluorométhane (R-32), du 1,3,3,3-tétrafluoropropène (R-1234ze(E)) et du 1,1-difluoroéthane (R-152a).

2. Utilisation selon la revendication 1, dans laquelle la composition de réfrigérant comprend en outre au moins un élément parmi le trifluoroéthylène (R-1123), le trifluoroiodométhane (CF₃I), le dioxyde de carbone (R-744, CO2) et le 1,1,1,2-tétrafluoroéthane (R-134a).

3. Utilisation comme réfrigérant dans un système de pompe à chaleur dans un véhicule électrique d'une composition comprenant de 3 à 30 % en poids de 1,1-difluoroéthylène (R-1132a) sur la base du poids total de la composition et du trifluoroiodométhane (CF₃I).

4. Utilisation selon la revendication 1, dans laquelle la composition de réfrigérant comprend de 3 à 30 % en poids de R-1132a, de R-152a et de R-1234yf, par exemple de 4 à 10 % en poids de R-1132a, de 2 à 30% en poids de R-152a et de 60 à 94 % en poids de R-1234yf.

5. Utilisation selon la revendication 1, dans laquelle la composition de réfrigérant comprend de 3 à 30 % en poids de R-1132a, au moins un composé réfrigérant de tétrafluoropropène choisi dans le groupe constitué de R-1234yf et de R-1234ze(E), et éventuellement du difluorométhane (R- 32), par exemple dans lequel le R-32 est présent en une quantité de 1 à 21 % en poids sur la base du poids total de la composition de réfrigérant.

6. Utilisation selon l'une quelconque des revendications 1 à 5, dans laquelle le R-1132a est présent en une quantité de 3 à 20 % en poids, par exemple d'environ 3 à environ 15 % en poids, sur la base du poids total de la composition de réfrigérant.

7. Utilisation selon la revendication 5 ou 6, dans laquelle la composition de réfrigérant comprend en outre du CF₃I, de préférence dans laquelle le CF₃I est présent en une quantité inférieure à celle du R-1234yf ou du R-1234ze (E), et/ou dans laquelle la composition de réfrigérant comprend de 3 à 30 % en poids de R-1132a, de R-32, de R-1234yf et de CF₃I.

8. Utilisation selon la revendication 5 ou 6, dans laquelle la composition de réfrigérant comprend en outre du CO₂ (R-744), de préférence dans laquelle la teneur combinée de CO₂ et de R-1132a est inférieure à environ 30 % en poids, par exemple inférieure à environ 20 % en poids et/ou dans laquelle la composition de réfrigérant comprend de 3 à 30 % en poids de R-1132a, de R-32, de R-1234yf et de CO₂.

9. Utilisation selon la revendication 1, 2 ou 6, dans laquelle la composition de réfrigérant comprend de 3 à 30 % en poids de R-1132a, de R-152a et éventuellement de R-32, par exemple dans laquelle la composition de réfrigérant comprend de 3 à 30 % en poids de R-1132a, de R-152a, de R-32 et au moins un composé réfrigérant de tétrafluoropropène choisi dans le groupe constitué de R-1234yf et de R-1234ze(E).

10. Utilisation selon l'une quelconque des revendications 3 à 7 ou 9, dans laquelle la composition de réfrigérant comprend en outre du R-134a, de préférence en une quantité d'environ 1 à environ 10 % en poids de R-134a.

11. Utilisation selon la revendication 2, dans laquelle la composition de réfrigérant comprend de 3 à 30 % en poids de R-1132a, de R-1123 et de R-1234yf ou dans laquelle la composition de réfrigérant comprend de 3 à 30 % en poids de R-1132a, de R-152a, de R-1234a et de R-1234yf.

12. Utilisation selon la revendication 2, dans laquelle la composition de réfrigérant comprend du R-1132a, du R-32 et du CO₂, de préférence d'environ 3 à environ 20 % en poids de R-1132a, d'environ 1 à environ 32 % en poids de R-32 et d'environ 50 à environ 95 % en poids de CO₂, par exemple d'environ 3 à environ 15 % en poids de R-1132a, d'environ 2 à environ 32 % en poids de R-32 et d'environ 55 à environ 93 % en poids de CO₂, par exemple d'environ 64 à environ 93 % en poids de dioxyde de carbone, d'environ 2 à environ 25 % en poids de difluorométhane et d'environ 3 à environ 14 % en poids de R-1132a, par exemple d'environ 65 à environ 93 % en poids de dioxyde de carbone, d'environ 2 à environ 22 % en poids de difluorométhane et d'environ 3 à environ 14 % en poids de R-1132a.

13. Utilisation selon l'une quelconque des revendications précédentes, dans laquelle la composition de réfrigérant a un potentiel de réchauffement global (GWP) inférieur à 150.

14. Utilisation selon l'une quelconque des revendications précédentes, dans laquelle le système de pompe à chaleur est également adapté pour effectuer une climatisation.

15. Utilisation selon l'une quelconque des revendications 1 à 14, dans laquelle la composition est constituée essentiellement des composants indiqués.

16. Utilisation selon l'une quelconque des revendications précédentes, dans laquelle la composition de réfrigérant est moins inflammable que le R-1132a seul, de préférence dans laquelle la composition de réfrigérant possède :
a. une limite d'inflammabilité plus élevée
b. une énergie d'allumage plus élevée ; et/ou
c. une vitesse de flamme inférieure
par rapport au R-1132a seul, de préférence dans laquelle la composition de réfrigérant est ininflammable, par exemple dans laquelle la composition de réfrigérant est ininflammable à température ambiante, ou dans laquelle la composition est ininflammable à 60 °C.

17. Utilisation selon l'une quelconque des revendications précédentes, dans laquelle le système de pompe à chaleur comprend en outre un lubrifiant, de préférence un lubrifiant polyolester (POE) ou polyalkylène glycol (PAG).

18. Utilisation selon l'une quelconque des revendications précédentes, dans laquelle la composition de réfrigérant s'évapore à des températures inférieures à -30 °C, de préférence dans laquelle la composition de réfrigérant se condense également à des températures supérieures à 40 °C et/ou dans laquelle la composition de réfrigérant présente un glissement de température dans un évaporateur ou un condenseur inférieur à environ 15K, de préférence inférieur à environ 10K, par exemple inférieur à environ 5K.

19. Utilisation selon l'une quelconque des revendications précédentes, dans laquelle la composition de réfrigérant peut fonctionner en mode pompe à chaleur à une température ambiante inférieure à environ -15 °C, de préférence inférieure à environ -20 °C.

20. Véhicule électrique équipé d'un système de pompe à chaleur et d'une composition de réfrigérant telle que définie selon l'une quelconque des revendications 1 à 19.

21. Procédé de réalisation d'un refroidissement dans un véhicule électrique, lequel procédé comprend l'évaporation d'une composition de réfrigérant telle que définie selon l'une quelconque des revendications 1 à 19 à proximité d'un corps à refroidir.

22. Procédé de réalisation d'un chauffage dans un véhicule électrique, lequel procédé comprend la condensation d'une composition de réfrigérant telle que définie selon l'une quelconque des revendications 1 à 19 à proximité d'un corps à chauffer.
